Europäisches Patentamt

European Patent Office

Office européen des brevets

(11) Publication number: 0 530 782 A1

# EUROPEAN PATENT APPLICATION

(21) Application number: 92115010.8

(22) Date of filing: 02.09.92

(51) Int. Cl.⁵: C08L 23/06, //(C08L23/06, 23:04)

(30) Priority: 03.09.91 US 754507

(43) Date of publication of application:
10.03.93 Bulletin 93/10

(84) Designated Contracting States:
AT BE CH DE DK FR GB IT LI NL SE

(71) Applicant: REXENE PRODUCTS COMPANY
5005 LBJ Freeway, Occidental Tower
Dallas, Dallas County, Texas 75244(US)

(72) Inventor: Lucas, Bennie Michael
6301 Mecca Street, Odessa
Ector County, Texas 79762(US)
Inventor: Krishnamurthy, Vaidyanathan
6501 East Ridge Road, Apt. 0 13, Odessa
Ector County, Texas 79762(US)

(74) Representative: Weinhold, Peter, Dr.
Patentanwälte Dipl.-Ing. G. Dannenberg Dr.
P. Weinhold Dr. D. Gudel Dipl.-Ing. S.
Schubert Dr. P. Barz Siegfriedstrasse 8
W-8000 München 40 (DE)

(54) Environmental stress crack resistant polyethylene blends.

(57) A resin blend for the production of articles having improved environmental stress crack resistance comprising:

(a) a linear low density copolymer of ethylene and a $C_4$ - $C_8$ higher olefin having from about 10 to about 15 long chain branches per 1000 carbons; and

(b) a low density polyethylene produced by high pressure free radical polymerization, the low density polyethylene having a density of from about 0.917 to about 0.925, a melt index of from about 0.1 to about 10 and an environmental stress crack resistance less than about 25 hours;

said resin blend having a swell ratio of from about 1.70 to about 2.20; and,

wherein said linear low density copolymer comprises an effective amount of from about 25% to about 35% of the blend to improve the environmental stress crack resistance of articles produced from the blend.

EP 0 530 782 A1

Rank Xerox (UK) Business Services
(3.10/3.5x/3.0.1)

This invention relates generally to polyolefin resin blends suitable for use in the production of plastic articles such as sheets, tubes and bottles where environmental stress crack properties are desirable and a method of producing such articles. In particular, the resin blends are suitable for producing articles by extrusion, blow molding, injection molding and similar processes, having improved environmental stress crack resistance.

Low density polyethylenes (LDPE) are known for their ease of processibility, which facilitates their conversion into finished articles such as bottles and tubes using a variety of processes including extrusion, blow molding and injection molding processes. The properties of low density polyethylenes are, however, not always totally satisfactory due to environmental stress cracking in applications in which the finished product is in contact with materials that contain detergents, surfactants and similar compounds.

Environmental stress cracking (ESC) is a term used to describe a mechanism of chemical attack in which an agent that does not appreciably attack or dissolve a polymer in an unstressed condition will cause failure through the initiation and propagation of cracks or crazes when the polymer is stressed while in contact with the agent. The mechanism and rate at which environmental stress cracking occurs in a given plastic depends upon the specific agent, its concentration, the plastic, the temperature, the amount of stress and other factors such as surface roughness and polymer morphology, the effect of which is not completely understood.

Certain low density polyethylenes are susceptible to environmental stress cracking. Consequently the use of these low density polyethylenes to manufacture products such as tubes and bottles that are ultimately placed in contact with materials containing detergents, surfactants and similar agents has been restricted. Thus, there is a need for a resin blend that combines the processibility of low density polyethylenes with improved resistance to environmental stress cracking.

In accordance with the present invention, resin blends are provided that substantially retain the processibility of low density polyethylene while providing improved environmental stress crack resistance (ESCR). The blends contain: (a) from about 25% to about 35% of a linear low density polyethylene (LLDPE) containing from about 8% to about 12% octene and having from about 10 to about 15 long chain branches per 1000 carbons; and (b) a LDPE having a melt index of less than about 10, a density of less than about 0.925 g/cm$^3$ and an environmental stress crack resistance of less than about 25 hours as determined in accordance with ASTM 1693, Condition A. The blends provide dramatically improved environmental stress crack resistance while simultaneously providing the processibility of low density polyethylenes. The blends fit the swell ratio/melt index processing window imposed by existing equipment, processes and product specifications and are particularly useful in the production of plastic articles such as bottles, tubes and the like, produced by extrusion, blow molding, injection molding and similar processes.

Low density, highly branched polyethylenes produced by high pressure free radical polymerization of ethylene in an autoclave or tubular type reactor possess a unique combination of properties including toughness, high impact strength and flexibility. Certain low density polyethylenes are, however, susceptible to environmental stress cracking, a phenomena that occurs when the polyethylene is exposed to detergents, surfactants and similar materials while under stress. Consequently, the applicability of these low density polyethylenes to the production of plastic containers such as tubes and bottles for shampoos, soaps, detergents and the like has been limited.

The low density polyethylenes of interest in connection with the practice of the present invention have an environmental stress crack resistance that is typically less than about 25 as determined in accordance with ASTM 1693, ENVIRONMENTAL STRESS-CRACKING OF ETHYLENE PLASTICS, Condition A, which is incorporated herein by reference. Low density polyethylenes useful in the practice of the invention include low density branched polyethylenes having a density of from about 0.917 grams/cm$^3$ to about 0.925 grams/cm$^3$ and a melt index of less than about 10, e.g. from about 0.1 to about 10, and preferably from about 1.0 to 6.0.

Linear low density polyethylenes are copolymers of ethylene and a higher olefin, typically $C_4$ - $C_8$ alpha olefins. These copolymers exhibit improved strength and environmental stress crack resistance over low density polyethylenes. Linear low density polyethylene, however, because of its linearity and narrow molecular weight distribution, has poorer processing characteristics, requiring increased temperatures and pressures in forming processes such as extrusion, blow molding and injection molding. Thus, substantial substitution of linear low density polyethylene for low density polyethylene cannot normally be accomplished without expensive retooling. Discussions of various blow molding, extrusion and injection molding processes are presented in the 1989 Mid-October Issue of Modern Plastics Encyclopedia, at pages 217-224, 242-244, and 264-276, respectively and are incorporated herein by reference.

A factor that must be considered in the selection of materials for blow molding and similar applications is the swell of the parison as it exits the die. This parameter is important in the production of articles that must meet size specifications. Therefore, in order to utilize existing equipment with a given polymer blend, the swell characteristic of the polymer must match the processing capability of the equipment. The swell characteristics of the blends of the present invention are such that the blends may be readily adapted to applications where improved ESCR is required or desired using existing equipment.

One measure of the swell characteristics of a resin blend is the swell ratio: the ratio of the diameter of an extrudate to the diameter of a die under specified conditions. The low density polyethylenes and the LDPE/LLDPE blends of interest typically have a swell ratio of from about 1.70 to about 2.20 as determined by measuring the diameter of the semimolten extrudate from a 0.0825 inch die using a standard melt indexer with a dead weight of 4.9 Kg. at 210°C. The diameter of the extrudate is measured at a point approximately 5.0 cm. from the tip of the die using a Model No. 163-100 dual axis laser scanner manufactured by Laser Mike Inc., of Dayton, Ohio. Measurements are taken at a rate of 1 reading every 2 seconds for a period of 10 seconds and readings averaged. Preferably, the resin blends have a swell ratio of from about 1.70 to about 2.20. More preferably, the resin blends have a swell ratio of from about 1.8 to about 2.1.

An additional element of the processing window imposed by existing equipment and processes is the melt index of resin blends that may be used in a given process. Thus, a processing "window" imposed by existing equipment and process dictates a range on the swell ratio and melt index of resin blends that may be appropriate for a given product application using existing processes and equipment. For the purposes of the invention, resin blends of low density polyethylene and linear low density polyethylenes preferably have a melt index of from about 0.5 to about 2.5 to fit the applicable processing windows. Most preferably, the resin blends have a melt index of from about 0.5 to about 2.0.

It was also discovered that the amount of improvement in environmental stress crack resistance obtained by blending low density polyethylenes with linear low density polyethylenes was not only a function of the percentage of linear low density polyethylene in the blend but also varied widely with the specific linear low density polyethylene used in the blend. While not wishing to be bound or limited to any particular theory, it is believed that the improvement in environmental stress crack resistance provided by the resin blends of the invention is at least partially attributable to the degree of long chain branching in the linear low density polyethylene. A long chain branch, as used herein, refers to a branch having more than five carbon atoms, as determined by C-13 NMR analysis. A method of determining polyethylene branching is disclosed in H. N. Cheng, Determination of Polyethylene Branching Through Computerized $^{13}$C NMR Analysis, Polymer Bull., 16, 445 (1986).

It is believed that an optimal number of long chain branches in the linear low density polyethylene prevent or slow crack growth, thereby increasing the time to failure. When the degree of branching is above the optimum range, the branches are not as effective in preventing or retarding crack growth as crack growth can take a number of paths. Thus, it was discovered that a blend of about 25% to about 35% linear low density polyethylene having 10 to 15 long chain side branches per 1000 carbons with 65% to 75% low density polyethylene provided dramatically improved environmental stress crack resistance as compared to LDPE alone or other LLDPE/LDPE blends.

Suitably the linear low density polyethylene has a density of less than about 0.93 g/cm$^3$, preferably of from about 0.915 g/cm$^3$ to about 0.925 g/cm$^3$, a melt index of less than 1.5, e.g. of from about 0.8 to about 1.2, preferably of from about 0.9 to about 1.1.

A linear low density polyethylene useful in the practice of the present invention has a density of about 0.92 grams/cm$^3$, a melt index of about 0.9, an octene content of about 11% and approximately 13 long chain branches per 1000 carbon atoms and is manufactured and sold by Dow Chemical under the trade designation Dowlex 2045.

It was also discovered that environmental stress crack resistance of samples produced from the LLDPE/LDPE blends was at least partially a function of the melt index of the particular low density polyethylene included in the blend. In order to produce a blend having a high degree of environmental stress crack resistance with a low density polyethylene having a relatively high melt index, for example about 6, a proportionally greater amount of linear low density polyethylene is required. The relationship between the minimum amount of linear low density polyethylene having 10 to 15 long chain side branches per 1000 carbons required to produce a blend having high ESCR, for example greater than 100, and the melt index of the low density polyethylene in the blend is approximated by the following relationship:

%LLDPE = 16.33 + 21.01*log (melt index of LDPE)[*]

[*] Relationship specific to LLDPE #3 of Examples.

Preferably, the resin blends of the present invention have a density less than about 0.93 g/cm, preferably less than 0.925 g/cm$^3$, and contain an amount of linear low density polyethylene having approximately 10 to 15 long chain side branches per 1000 carbons to increase the environmental stress crack resistance of a low density polyethylene having a relatively low environmental stress crack resistance, for example less than 25 hours, e.g. from about 1 hour to about 25 hours, to a value of at least 100 hours as measured by ASTM 1693, Condition A. More preferably, the environmental stress crack resistance of the blends is improved to a value of at least 300 hours.

The effectiveness of a linear low density polyethylene with an optimum number of long chain branches in improving environmental stress crack resistance is evidenced in the following examples which illustrate the invention; however, the scope of the invention is not to be limited thereby.

EXAMPLES

The following low density polyethylenes of Table 1 below, commercially available from Rexene Products Company, Odessa, Texas were blended with various amounts of the different linear low density polyethylenes of Table 2.

TABLE 1

| LOW DENSITY POLYETHYLENES | | |
|---|---|---|
| Low Density Polyethylene | Melt Index | Density g/cm$^3$ |
| XO849 | 0.5 | 0.924 |
| PE6010 | 1.0 | 0.921 |
| PE6014 | 1.3 | 0.919 |
| PE1017 | 2.0 | 0.920 |
| PE2030 | 5.0 | 0.919 |
| PE5020 | 4.0 | 0.917 |
| XO860 | 1.2 | 0.917 |
| XO862 | 2.5 | 0.918 |
| XO873 | 6.0 | 0.920 |

TABLE 2 - LINEAR LOW DENSITY POLYETHYLENES

|  | #1 | #2 | #3 | #4 |
|---|---|---|---|---|
| MI, g/10 min | 1.0 | 3.9 | 0.9 | 0.9 |
| Comonomer | butene | octene | octene | octene |

## TABLE 2 (continued)

|  | #1 | #2 | #3 | #4 |
|---|---|---|---|---|
| Wt % Comonomer | 7.7 | 2.7 | 10.7 | 12.7 |
| Density (gm/cm$^3$) | 0.919 | 0.940 | 0.921 | 0.912 |
| Long Chain Branches per 1000 carbons | 0.0 | 3.4 | 13.1 | 17.5 |
| Molecular Weight Data* | | | | |
| Mn X 10$^{-3}$ | 26 | 24 | 30 | 24 |
| Mw X 10$^{-3}$ | 95 | 75 | 100 | 90 |
| Mz X 10$^{-3}$ | 215 | 155 | 230 | 215 |
| PDI=Mw/Mn | 3.7 | 3.1 | 3.3 | 3.8 |

* Reference standard used was NIST 1475 polyethylene standard

Environmental stress crack resistance of polyethylenes is determined in accordance with ASTM D1693 Condition A and reported in hours. Compression molded samples are longitudinally notched and bent into C shaped test specimens. The test specimens are immersed in 100% Igepal (a strong detergent) and the time to failure monitored. The ESCR value in hours is determined graphically as the time for 50% failure. ESCR values for various blends of the low density and linear low density polyethylenes identified in Tables 1 and Table 2 are tabulated below.

TABLE 3

| BLEND | MELT INDEX | ESCR-ASTM D1693 CONDITION A (HRS) |
|---|---|---|
| 100% PE6010 | 1.0 | 1 |
| 90% PE6010 - 10% LLDPE #1 | 1.0 | 3 |
| 80% PE6010 - 20% LLDPE #1 | 0.8 | 12 |
| 70% PE6010 - 30% LLDPE #1 | - | 24 |
| 60% PE6010 - 40% LLDPE #1 | - | >240 |
| 90% PE6010 - 10% LLDPE #2 | - | 1 |
| 80% PE6010 - 20% LLDPE #2 | - | 10 |
| 70% PE6010 - 30% LLDPE #2 | - | >216 |
| 60% PE6010 - 40% LLDPE #2 | - | >216 |
| 90% PE6010 - 10% LLDPE #3 | 0.9 | 20, 11 |
| 85% PE6010 - 15% LLDPE #3 | - | 108, 80 |
| 80% PE6010 - 20% LLDPE #3 | 0.8 | >216, 253, 841*,>744 |
| 75% PE6010 - 25% LLDPE #3 | 0.7 | >720, >720, >720, >720 |
| 70% PE6010 - 30% LLDPE #3 | - | >216 |
| 60% PE6010 - 40% LLDPE #3 | - | >216 |
| 85% PE6010 - 15% LLDPE #4 | - | 25, 46 |
| 80% PE6010 - 20% LLDPE #4 | 0.8 | 22, 229 |

(*) Sample conditioned for about 2-3 weeks after molding rather than 40-96 hours as specified in the test method

TABLE 4

| BLEND | MELT INDEX | ESCR-ASTM D1693 CONDITION A (HRS) |
|---|---|---|
| 100% XO849 | 0.5 | 3, 22 |
| 97.5% XO849 - 2.5% LLDPE #3 | 0.5 | 33 |
| 95% XO849 - 5.0% LLDPE #3 | 0.6 | 40 |
| 90% XO849 - 10% LLDPE #3 | 0.5 | 285, 169, 115 |
| 85% XO849 - 15% LLDPE #3 | 0.5 | 388, 160, >648 |
| 90% XO849 - 10% LLDPE #4 | - | 16,17 |
| 85% XO849 - 15% LLDPE #4 | - | 127, 168 |

TABLE 5

| BLEND | MELT INDEX | ESCR-ASTM D1693 CONDITION A (HRS) |
|---|---|---|
| 100% PE6014 | 1.3 | 2 |
| 90% PE6014 - 10% LLDPE #3 | - | 23 |
| 80% PE6014 - 20% LLDPE #3 | - | 189 |
| 70% PE6014 - 30% LLDPE #3 | 0.8 | >720, >720, >720, >720 |

TABLE 6

| BLEND | MELT INDEX | ESCR-ASTM D1693 CONDITION A (HRS) |
|---|---|---|
| 100% PE1017 | 2.0 | 2 |
| 90% PE1017 - 10% LLDPE #3 | - | 17 |
| 80% PE1017 - 20% LLDPE #3 | - | 49 |
| 75% PE1017 - 25% LLDPE #3 | 1.2 | 185 |
| 72.5% PE1017 - 27.5% LLDPE #3 | 1.1 | >720, 294, 288, 651 |
| 70% PE1017 - 30% LLDPE #3 | 1.1 | >720 |

TABLE 7

| BLEND | MELT INDEX | ESCR-ASTM D1693 CONDITION A (HRS) |
|---|---|---|
| 100% PE2030 | 5.0 | 1 |
| 80% PE2030 - 20% LLDPE #3 | - | 10 |
| 70% PE2030 - 30% LLDPE #3 | 1.9 | 114 |
| 65% PE2030 - 35% LLDPE #3 | 1.7 | >720, 645, 822 |
| 60% PE2030 - 40% LLDPE #3 | 1.6 | >720 |

TABLE 8

| BLEND | MELT INDEX | ESCR-ASTM D1693 CONDITION A (HRS) |
|---|---|---|
| 100% PE5020 | 4.0 | 1 |
| 80% PE5020 - 20% LLDPE #3 | - | 18 |
| 75% PE5020 - 25% LLDPE #3 | | 42 |
| 70% PE5020 - 30% LLDPE #3 | 1.5 | 270 |
| 60% PE5020 - 40% LLDPE #3 | 1.3 | >720 |

6

TABLE 9

| BLEND | MELT INDEX | ESCR-ASTM D1693 CONDITION A (HRS) |
|---|---|---|
| 100% XO860 | 1.2 | 2 |
| 70% XO860 - 30% LLDPE #3 | 0.8 | >720, >720, >720 |
| 100% XO862 | 2.5 | 6 |
| 72.5% XO862 - 27.5% LLDPE #3 | 1.2 | >720, >720, >720 |
| 70% XO862 - 30% LLDPE 13 | 1.2 | >720, >720, >720 |
| 100% XO873 | 6.0 | 1 |
| 65% XO873 - 35% LLDPE #3 | 2.0 | >720, >720, >720 |

The swell ratio of a number of the low density polyethylenes and the low density/linear low density blends identified above was determined as described above. Swell is reported in Table 10 as the ratio of the diameter of the extrudate to the diameter of the die.

TABLE 10

| BLEND | BLEND DENSITY | SWELL |
|---|---|---|
| 100% PE6010 | 0.921 | 1.77 |
| 80% PE6010 - 20% LLDPE #3 | -- | 1.73 |
| 75% PE6010 - 25% LLDPE #3 | 0.922 | 1.74 |
| 100% PE6014 | 0.919 | 1.90 |
| 70% PE6014 - 30% LLDPE #3 | 0.921 | 1.84 |
| 100% PE1017 | 0.920 | 1.89 |
| 70% PE1017 - 30% LLDPE #3 | -- | 1.84 |
| 100% XO860 | 0.917 | 2.21 |
| 70% XO860 - 30% LLDPE #3 | 0.919 | 2.03 |
| 100% XO862 | 0.918 | 2.14 |
| 72.5% XO862 - 27.5% LLDPE #3 | -- | 2.04 |
| 70% XO862 - 30% LLDPE #3 | 0.919 | 1.96 |
| 65% PE2030 - 35% LLDPE #3 | 0.919 | 1.75 |
| 100% XO873 | 0.920 | 2.02 |
| 65% XO873 - 35% LLDPE #3 | 0.919 | 1.86 |

The foregoing examples illustrate that blends of from about 25% to about 35% of a linear low density polyethylene with about 10 to about 15 long chain branches per 1000 carbons with a low density polyethylene having a melt index of less than about 10 and a density of less than about 0.925 g/cm$^3$ have improved environmental stress crack resistance as compared to low density polyethylene and other LLDPE/LDPE blends. Additionally, these blends retain the desirable processing characteristics of low density polyethylene and may therefore be used without expensive retooling.

While particular embodiments of the present invention have been described, it will be apparent to those skilled in the art that various changes and modifications can be made without departing from the spirit and scope of the invention. The following claims are intended to cover all such modifications that are within the scope of the invention.

**Claims**

1. A resin blend for the production of environmental stress crack resistant articles comprising:
    (a) a low density polyethylene having a density of from about 0.917 g/cm$^3$ to about 0.925 g/cm$^3$, a melt index of from about 0.1 to about 10 and an environmental stress crack resistance less than about 25 hours; and
    (b) a linear low density copolymer of ethylene and a $C_4$-$C_8$ higher olefin having from about 10 to about 15 long chain branches per 1000 carbon atoms wherein said linear low density copolymer comprises an effective amount of from about 25% to about 35% of the blend to improve the environmental stress crack resistance of articles produced from the blend;

7

EP 0 530 782 A1

said resin blend having a density of less than about 0.930 g/cm$^3$, a melt index of from about 0.5 to about 2.5 and a swell ratio of from about 1.70 to about 2.20.

2. The resin blend of claim 1 wherein the low density polyethylene is produced by high pressure free radical polymerization of ethylene.

3. The resin blend of anyone of claims 1 or 2 wherein the linear low density polyethylene has a density of less than 0.93 g/cm$^3$, preferably of from about 0.915 g/cm$^3$ to about 0.925 g/cm$^3$.

4. The resin blend of anyone of claims 1 to 3 wherein the linear low density copolymer of ethylene and a C$_4$-C$_8$ olefin has a melt index of less than 1.5, e.g. of from about 0.8 to about 1.2 and preferably of from about 0.9 to about 1.1.

5. The resin blend of anyone of claims 1 to 4 wherein the linear low density polyethylene is a copolymer of ethylene and from about 8% to about 12% octene.

6. The resin blend of claim 5 wherein the linear low density copolymer of ethylene and octene has a density of about 0.92 g/cm$^3$, a melt index of about 0.9, an octene content of about 11% and approximately 13 long chain branches per 1000 carbons.

7. The resin blend of anyone of claims 1 to 6 wherein the resin blend has a density of less than about 0.925 g/cm$^3$.

8. The resin blend of anyone of claims 1 to 7 wherein the low density polyethylene has a melt index of from about 1.0 to about 6.0.

9. The resin blend of anyone of claims 1 to 7 wherein the resin blend has a melt index of from about 0.5 to about 2.0.

10. The resin blend of anyone of claims 1 to 9 wherein the linear low density polyethylene is present in an amount effective to increase the environmental stress crack resistance of articles produced from the blend to at least 100 hours, preferably to at least 300 hours.

11. An article produced from the resin blend of anyone of claims 1 to 10.

12. A method of producing a resin blend comprising:
blending a low density polyethylene resin produced by high pressure free radical polymerization of ethylene having a density from about 0.917 gm/cm$^3$ to about 0.925 gm/cm$^3$, a melt index of from about 0.1 to about 10.0 and an environmental stress crack resistance of less than about 25 hours with a linear low density copolymer of ethylene and a C$_4$ - C$_8$ higher olefin having from about 10 to about 15 long chain branches per 1000 carbon atoms, a density of less than about 0.93 and a melt index of less than 1.5, said linear low density copolymer being present in the blend in an amount effective to produce articles having an environmental stress crack resistance of at least 100 hours, preferably of at least 200 hours and most preferably of at least 300 hours, said resin blend having a density of less than about 0.930 g/cm$^3$, a swell index of from about 1.7 to about 2.20 and a melt index of from about 0.5 to about 2.5.

13. The method of claim 12 wherein the resin blend comprises from about 25% to about 35% of a linear low density copolymer of ethylene and a C$_4$ - C$_8$ higher olefin having from about 10 to about 15 long chain branches per 1000 carbon atoms.

14. A method of increasing the environmental stress crack resistance of plastic containers comprising:
producing a tube or bottle suitable for use as a container for liquids containing surfactants or detergents from a blend of a low density polyethylene resin produced by high pressure free radical polymerization of ethylene having a density from about 0.917 gm/cm$^3$ to about 0.925 gm/cm$^3$, a melt index of from about 0.1 to about 10.0 and an environmental stress crack resistance of less than about 25 hours with a linear low density copolymer of ethylene and a C$_4$ - C$_8$ higher olefin having from about 10 to about 15 long chain branches per 1000 carbon atoms, a density of less than about 0.93 and a

8

melt index of less than 1.5, said linear low density copolymer being present in the blend in an amount effective to increase the environmental stress crack resistance of articles produced from the blend to a value of at least 300 hours, said resin blend having a density of less than about 0.930 g/cm$^3$, a swell index of from about 1.7 to about 2.20 and a melt index of from about 0.5 to about 2.5.

15. The method of anyone of claims 12 to 14 wherein said articles are produced by blow molding, extrusion or injection molding.

European Patent Office

**EUROPEAN SEARCH REPORT**

Application Number

EP 92 11 5010

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 310 092 (UNION CARBIDE CORPORATION) * page 2, line 19 - line 28; claims * | 1-15 | C08L23/06 //(C08L23/06, 23:04) |
| X | EP-A-0 342 750 (STAMICARBON B.V.) * page 2, line 14; claims * | 1-13 | |
| A | EP-A-0 072 750 (ASAHI KASEI KOGYO KABUSHIKI KAISHA) * page 2, line 31 - page 3, line 32; claims * | 1-13 | |

TECHNICAL FIELDS
SEARCHED (Int. Cl.5 )

C08L

The present search report has been drawn up for all claims

| Place of search | Date of completion of the search | Examiner |
|---|---|---|
| THE HAGUE | 04 NOVEMBER 1992 | CLEMENTE GARCIA R. |